# EUROPÄISCHE PATENTSCHRIFT

(11) **EP 2 640 224 B1**
(45) Veröffentlichungstag und Bekanntmachung des Hinweises auf die Patenterteilung: **05.08.2015**
(21) Anmeldenummer: 11773649.6
(22) Anmeldetag: 30.09.2011
(51) Int. Cl.: F16B 41/00, A47B 88/00

(54) **AUFLAGE FÜR EINEN SCHUBLADENBODEN**
OVERLAY FOR A DRAWER BOTTOM
SUPPORT POUR UN FOND DE TIROIR

(30) Priorität: 16.11.2010 AT 18822010
(43) Veröffentlichungstag der Anmeldung: 25.09.2013
(73) Patentinhaber: Julius Blum GmbH, 6973 Höchst (AT)
(72) Erfinder: WUCHER, Jürgen, 6914 Hohenweiler (AT)
(74) Vertreter: Maschler, Christoph
(86) Internationale Anmeldenummer: PCT/AT2011/000402
(87) Internationale Veröffentlichungsnummer: WO 2012/065196

(56) Entgegenhaltungen:
- EP-A1- 0 626 144
- DE-U1- 9 303 903
- DE-U1- 20 209 416

## Beschreibung

Die vorliegende Erfindung bezieht sich auf eine Auflage für ein plattenförmiges Möbelteil, insbesondere einen Schubladenboden, wobei die Auflage einen Anlagesteg aufweist, der wenigstens einen zum Möbelteil hin verbiegbaren Lappen aufweist.

Darüber hinaus betrifft die Erfindung eine Schubladenseitenwand mit einer Auflage der zu beschreibenden Art sowie eine Schublade mit einer derartigen Schubladenseitenwand.

Schubladenseitenwände in Form von Hohlkammerprofilen, welche beispielsweise aus metallischen Strangpressprofilen oder metallischen Teilprofilen hergestellt sind, weisen zur Befestigung eines Schubladenbodens häufig einen seitlichen Anlagesteg auf, an dem der seitliche Randbereich des Schubladenbodens abstützbar ist. Um Verschiebungen des Schubladenbodens relativ zur Schubladenseitenwand zu verhindern, werden im Anlagesteg Lappen ausgestanzt, welche nach erfolgter Positionierung des Schubladenbodens in diesen eingedrückt werden und so eine Fixierung herbeiführen.

Eine solche Befestigungsmöglichkeit eines Schubladenbodens ist beispielsweise in der in EP 0 888 737 B1 der Anmelderin beschrieben. Nachteilig dabei ist, dass die Lappen mit einem speziellen Werkzeug in das Material der Bodenplatte eingedrückt werden müssen, wofür auch ein relativ hoher Kraftaufwand erforderlich ist.

In der EP 0 692 208 A1, in der EP 0 888 737 A1, in der DE 91 13 006 U1 und in der DE 91 13 477 U1 sind jeweils Schubladen mit einem Schubladenboden beschrieben, der durch verbiegbare Lappen, welche an Schubladenzargen angeordnet sind, zu befestigen ist.

Aufgabe der vorliegenden Erfindung ist es, eine Auflage der eingangs erwähnten Gattung anzugeben, wobei das plattenförmige Möbelteil über eine verbesserte Befestigungsmöglichkeit relativ zur Auflage fixiert werden kann.

Dies wird erfindungsgemäß durch die Merkmale des Patentanspruchs 1 gelöst. Weitere vorteilhafte Ausgestaltungen der Erfindung sind in den abhängigen Unteransprüchen angegeben.

Gemäß der Erfindung ist also vorgesehen, dass der wenigstens eine Lappen in einer Ausgangsstellung in einer Aussparung des Anlagesteges liegt und dass der Lappen und/oder der Rand der Aussparung eine Führungseinrichtung aufweist bzw. aufweisen, wobei der - vorzugsweise durch Eindrehen einer Schraube - seitlich auf den Rand der Aussparung zubewegte Lappen über die Führungseinrichtung in einer Haltestellung zum Möbelteil hin aus der Aussparung austritt. Durch die vorgesehene Führungseinrichtung kann der wenigstens eine Lappen mit zusätzlichem Druck gegen das plattenförmige Möbelteil gepresst werden.

Somit kann die Auflage ab Werk mit einem oder mehreren Lappen versehen werden, welche im Wesentlichen bündig in der Aussparung angeordnet werden können. Auf diese Weise existieren keine hervorspringenden Lappen, welche die Handhabung erschweren und darüber hinaus Verletzungen des Montagepersonals verursachen könnten. Erst bei der Montage treten die Lappen aus der Aussparung heraus in Richtung Möbelteil und fixieren dieses auf zuverlässige Weise.

Auch wird die Montage erleichtert, da hierfür keine spezielle Ausbildung eines Werkzeuges, sondern lediglich eine handelsübliche Schraube sowie ein passender Schraubendreher, erforderlich sind. Der wenigstens eine Lappen wird beim Eindrehen der Schraube über eine Führungseinrichtung - vorzugsweise eine Schrägfläche oder eine Rundung - derart bewegt, dass sich dieser bei der Montage aus der Aussparung herausbewegt und sich an die Unterseite des Schubladenbodens anlegt, ohne dabei wesentlich in das Material des Schubladenbodens einzudringen, wodurch also ein mühevolles Einpressen des Lappens in das Holzmaterial des Schubladenbodens entfallen kann. Der Lappen legt sich an der Unterseite des Schubladenbodens an und drückt diesen nach oben, wobei sich die Oberseite des Schubladenbodens an einem vorgesehenen Anschlag abstützen kann. Der Anschlag kann als Nase an einer Schubladenzarge angeordnet sein, welche in Montagelage zur Schubkastenmitte hin vorsteht.

Gemäß einem Ausführungsbeispiel der Erfindung kann vorgesehen sein, dass der Anlagesteg eine, vorzugsweise im Wesentlichen kreisförmige, Öffnung zur Aufnahme der Schraube aufweist. Somit weist der Anlagesteg eine definierte Montagestelle zum Eindrehen der Schraube auf, durch die der wenigstens eine Lappen seitlich auf den Rand der Aussparung zubewegt werden kann.

Gemäß einem weiteren Ausführungsbeispiel kann vorgesehen sein, dass wenigstens zwei Lappen vorgesehen sind, welche jeweils durch Eindrehen der Schraube relativ zueinander bewegbar, vorzugsweise um die Schraubenachse relativ zueinander verdrehbar sind. Insbesondere können die wenigstens zwei Lappen durch Eindrehen der Schraube relativ zueinander aufgespreizt werden, um so eine vergrößerte Auflagefläche für den Schubladenboden auszubilden.

Die erfindungsgemäße Schubladenseitenwand ist durch wenigstens eine Auflage der beschriebenen Art gekennzeichnet. Die erfindungsgemäße Schublade weist wenigstens eine derartige Schubladenseitenwand auf.

Weitere Einzelheiten und Vorteile der vorliegenden Erfindung werden anhand des in den Figuren gezeigten Ausführungsbeispiels erläutert. Dabei zeigt bzw. zeigen:
- Fig. 1: eine perspektivische Darstellung eines Möbels mit Schubladen, welche über Schubladenausziehführungen gegenüber einem Möbelkorpus verfahrbar gelagert sind,
- Fig. 2: eine perspektivische Schnittdarstellung einer Schublade,
- Fig. 3a-3c: eine perspektivische Ansicht auf die Unterseite der Schublade und perspektivische Detaildarstellungen der Lappen im Ausgangszustand sowie im eingeschraubten Zustand,
- Fig. 4a-4c: eine perspektivische Darstellung einer mit der Schubladenseitenwand zu verbindenden Schiene, an welcher der Anlagesteg für den Schubladenboden angeordnet ist sowie perspektivische Detaildarstellungen der Lappen im Ausgangszustand sowie im eingeschraubten Zustand,
- Fig. 5a-5c: eine Schnittdarstellung der Schubladenseitenwand sowie Detaildarstellungen des Schubladenbodens nach erfolgter Vorpositionierung sowie im befestigten Zustand,
- Fig. 6a-6c: verschiedene Möglichkeiten zur Anordnung der Schrägfläche,
- Fig. 7a, 7b: ein weiteres Ausführungsbeispiel der Erfindung mit nur einem Lappen.

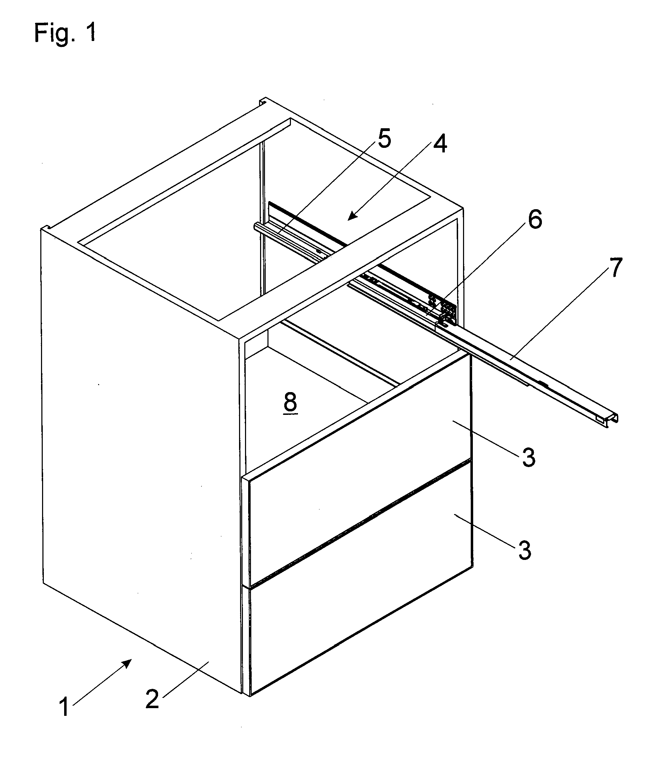

Fig.1 zeigt eine perspektivische Darstellung eines Möbels 1, wobei Schubladen 3 über Schubladenausziehführungen 4 relativ zu einem Möbelkorpus 2 verfahrbar gelagert sind. Die Schubladenausziehführung 4 ist im gezeigten Ausführungsbeispiel als dreiteiliges Schienensystem ausgebildet und weist eine am Möbelkorpus 2 zu befestigende Korpusschiene 5, eine relativ dazu verfahrbare Mittelschiene 6 und eine ausziehbare Ladenschiene 7 auf, welche mit einer an der Schublade 3 zu montierenden und hier nicht ersichtlichen Auflage zu verbinden ist. Es ist jedoch auch möglich, die Schubladenausziehführung 4 als zweiteiliges Schienensystem mit nur einer ausziehbaren Schiene auszuführen, wobei die an der Schublade 3 zu montierende Auflage auch als Ladenschiene zur Realisierung eines Vollauszuges in Funktion treten kann. Die Schubladen 3 weisen jeweils einen Schubladenboden 8 auf, der - wie in den nachfolgenden Figuren beschrieben - mit der Auflage zu verbinden ist.

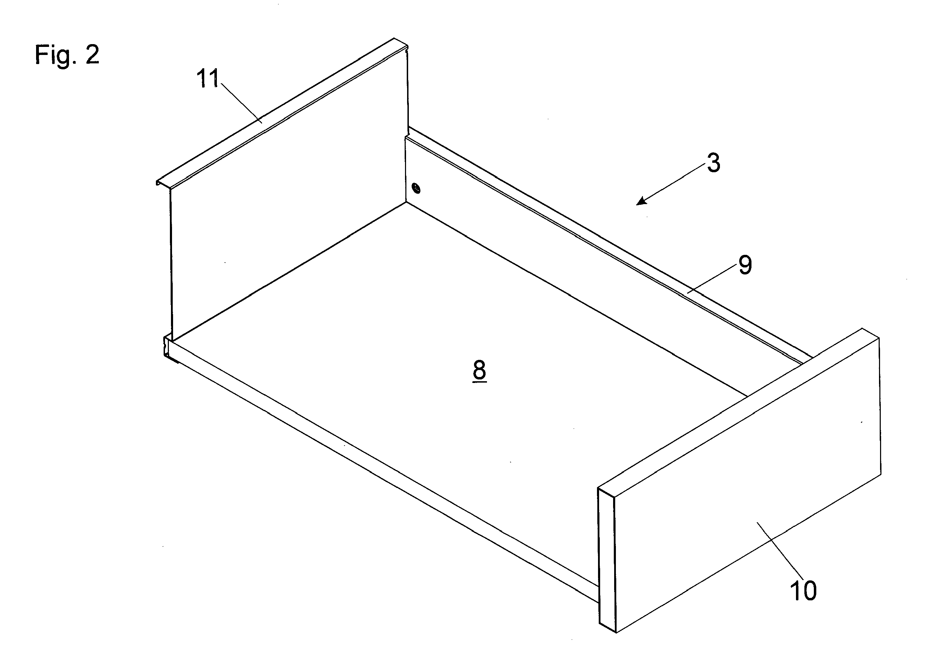

Fig. 2 zeigt eine perspektivische Schnittdarstellung der Schublade 3 mit einer Schubladenseitenwand 9, einer Fronblende 10, einer Rückwand 11 sowie mit einem Schubladenboden 8. Die noch zu beschreibende Befestigung des Schubladenbodens 8 eignet sich nicht nur zur Verbindung mit der Seitenwand 9, sondern auch mit der Rückwand 11 und/oder mit der Frontblende 10. Die Schubladenseitenwand 9 kann als doppelwandige Hohlkammerzarge ausgebildet werden.

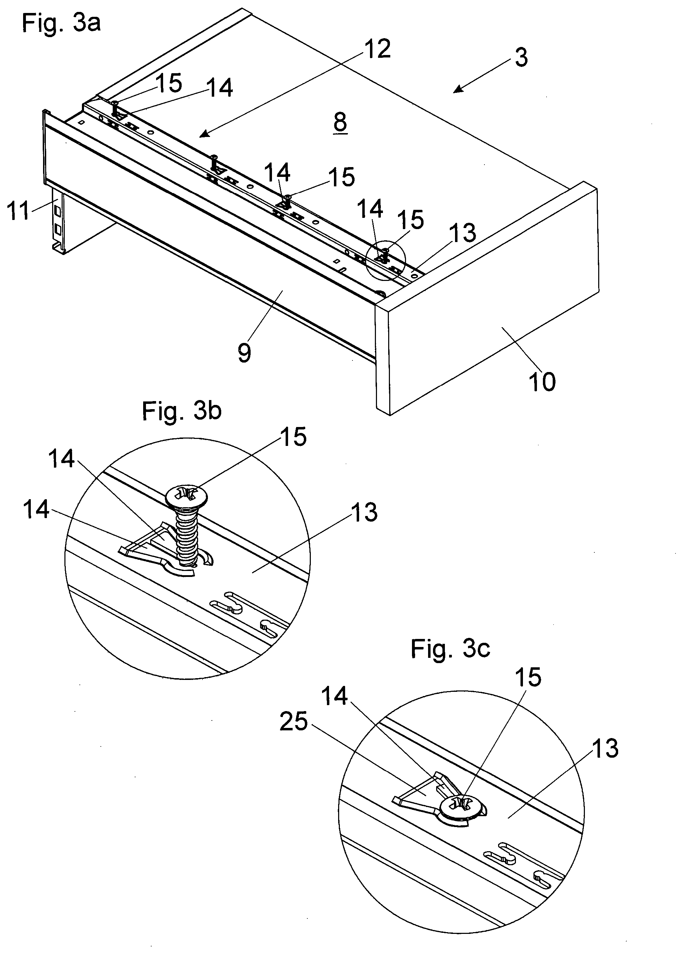

Fig. 3a zeigt eine perspektivische Darstellung auf die Unterseite der Schublade 3, wobei mit der Schubladenseitenwand 9 eine Auflage 12 verbunden oder zu verbinden ist. Die Auflage 12 ist als Schienenprofil ausgebildet, welches im Querschnitt im Wesentlichen S-förmig oder Z-förmig ausgebildet ist. Die Auflage 12 weist einen Anlagesteg 13 auf, der über daran ausgebildeten Lappen 14 bzw. Schrauben 15 mit der Unterseite des Schubladenbodens 8 zu verbinden ist. In Fig. 3b ist eine Detaildarstellung des in Fig. 3a eingekreisten Bereiches dargestellt, wobei eine Schraube 15 bereits in einer Öffnung des Anlagesteges 13 eingesteckt ist. In Fig. 3b sind zwei ausgestanzte Lappen 14 erkennbar, welche in einer Ausgangsstellung im Wesentlichen bündig in einer Aussparung 25 des Anlagesteges 13 angeordnet sind und so eine gemeinsame Ebene mit dem Anlagesteg 13 ausbilden. Durch Eindrehen der Schraube 15 können die beiden Lappen 14 in Bewegungsrichtung der Schraube 15 gedrückt werden, wobei die beiden Lappen 14 - bezogen auf die Schraubenachse - aufgespreizt werden, so wie es in Fig. 3c dargestellt ist. Die beiden flügelartigen Lappen 14 schieben sich also zwischen den Schubladenboden 8 und jener Seite des Anlagesteges 13, welche vom Kopf der Schraube 15 abgewandt ist.

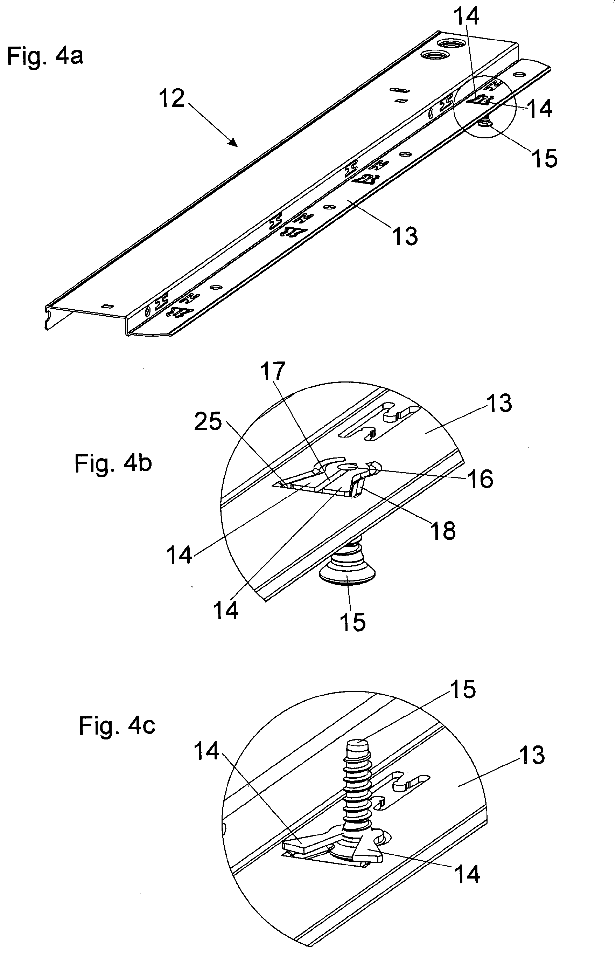

Fig. 4a zeigt eine perspektivische Darstellung der Auflage 12, die im Querschnitt einen U-förmigen Profilabschnitt mit einem daran angeschlossenen, in Montagelage horizontalen Anlagesteg 13 ausbildet. In diesem horizontalen Anlagesteg 13 befinden sich mehrere in Längsrichtung der Auflage 12 beabstandete Paare von Lappen 14, welche jeweils durch eine Schraube 15 aufspreizbar sind. In Fig. 4b ist eine vergrößerte Detaildarstellung des in Fig. 4a eingekreisten Bereiches dargestellt, wobei die beiden flügelförmigen Lappen 14 mit dem Anlagesteg 13 zunächst eine gemeinsame Ebene bilden. Die beiden Lappen 14 sind im gezeigten Ausführungsbeispiel im Wesentlichen symmetrisch ausgebildet und als Flügel mit jeweils einem freien Ende ausgebildet. Der Anlagesteg 13 weist eine, vorzugsweise im Wesentlichen kreisrunde, Öffnung 16 zur Aufnahme der Schraube 15 auf, wobei die Öffnung 16 am gegenüberliegenden Endbereich des freien Endes der Lappen 14 angeordnet ist. Die beiden Lappen 14 sind durch eine Fuge 17 voneinander getrennt, welche sich ausgehend von der Öffnung 16 in Längsrichtung der Auflage 13 erstreckt. Erkennbar ist eine am Rand der Aussparung 25 angeordnete Führungseinrichtung 18 (beispielsweise in Form einer Schrägfläche oder einer Rundung), wobei die Lappen 14 über das Zusammenwirken mit der Führungseinrichtung 18 aus der gemeinsamen Ebene heraus bewegbar sind. Fig. 4c zeigt die vollständig eingedrehte Schraube 15, wobei die beiden Lappen 14 relativ zueinander aufgespreizt sind und in Montagelage an der Unterseite des Schubladenbodens 8 anliegen. Die Schraube 15 ist dabei in dem aus einem Holzwerkstoff bestehenden Schubladenboden 8 eingeschraubt. Angemerkt sei, dass die Führungseinrichtung 18 in analoger Weise auch an den Lappen 25 ausgebildet sein kann oder sowohl am Rand der Aussparung 25 als auch an den Lappen 25.

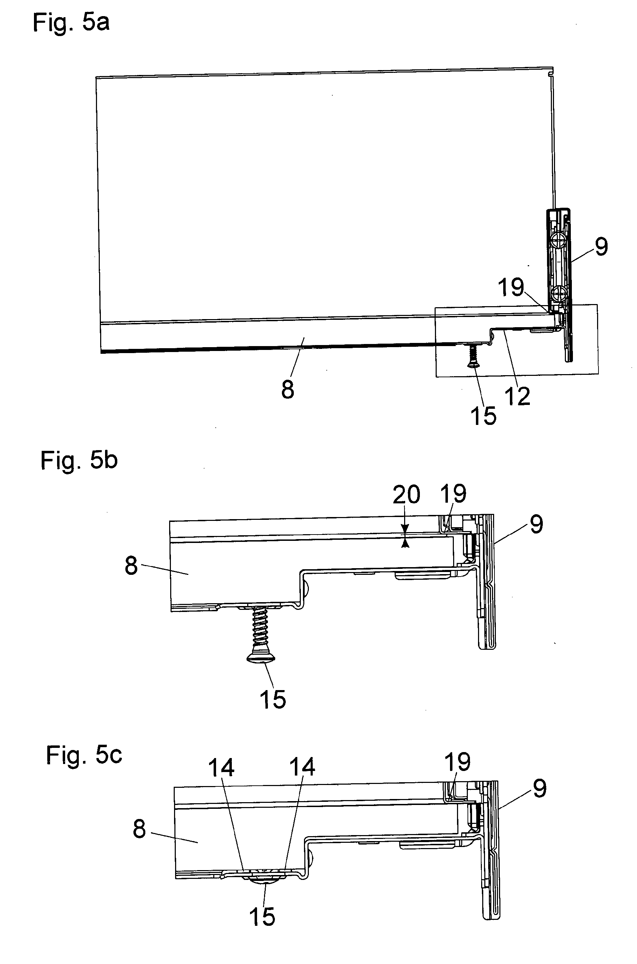

Fig. 5a zeigt einen Querschnitt der Schubladenseitenwand 9 mit einem daran vorpositionierten Schubladenboden 8. Zu erkennen ist ein an der Schubladenseitenwand 9 angeordneter, horizontaler Anschlag 19, an den die Oberseite des Schubladenbodens 8 durch Eindrehen der Schraube 15 anpressbar ist.

Fig. 5b zeigt eine vergrößerte Detaildarstellung des in Fig. 5a eingekreisten Bereiches. In Fig. 5a ist die Schraube 15 noch nicht eingedreht, wobei noch ein Spalt 20 zwischen der Oberseite des Schubladenbodens 8 und dem als Nase ausgebildeten Anschlag 19 der Schubladenseitenwand 9 verbleibt. Durch Eindrehen der Schraube 15 werden die beiden Lappen 14 sowohl zur Unterseite des Schubladenbodens 8 hin als auch relativ zueinander aufgespreizt, sodass sich die Lappen 14 an die Unterseite des Schubladenbodens 8 anliegen und die Oberseite des Schubladenboden 8 gegen den Anschlag 19 drücken, so wie es in Fig. 5c dargestellt ist. In Fig. 5c ist der in Fig. 5b gezeigte Spalt 20 nicht mehr vorhanden, sodass die Oberseite des Schubladenbodens 8 mit der Schubladenseitenwand 9 spaltfrei abschließt. Das dem Innenraum der Schublade 3 zugewandte Profil der Schubladenseitenwand 8 steht im Wesentlichen senkrecht zur Oberseite des Schubladenbodens 8.

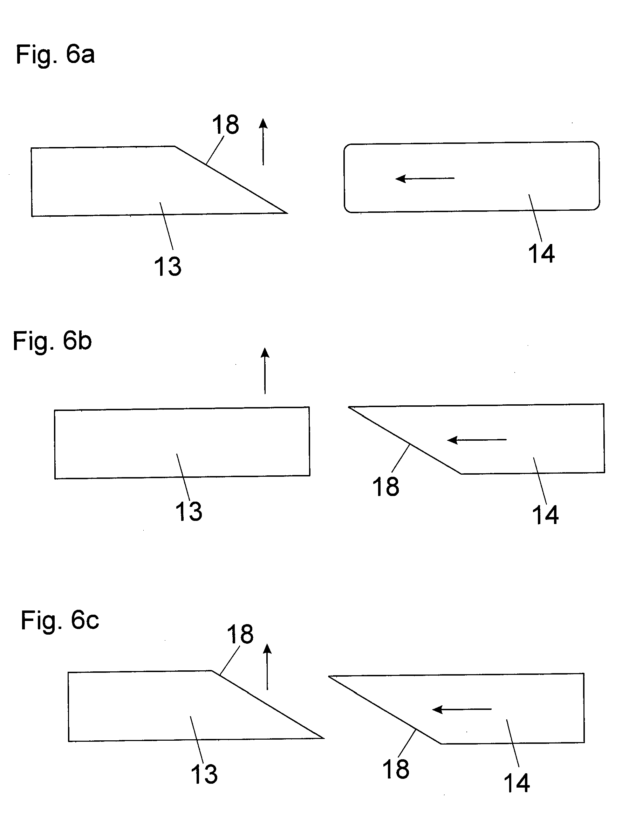

Fig. 6a-6c zeigen verschiedene Möglichkeiten zur Anordnung der Führungseinrichtung 18, durch die der Lappen 14 aus der Aussparung 25 heraus und somit in Montagelage in Richtung Schubladenboden 8 bewegbar ist. In Fig. 6a ist die Führungseinrichtung 18 am Rand des Anlagesteges 13 angeordnet, während der Lappen 14 selbst keine eigene Schrägfläche aufweist. Bei einer Bewegung des Lappens 14 zu der als Schrägfläche ausgebildeten Führungseinrichtung 18 hin wird der Lappen 14 angehoben und in Richtung des vertikalen Pfeiles bewegt. In Fig. 6b ist hingegen die Führungseinrichtung 18 am Lappen 14 angeordnet. Bei einer Bewegung des Lappens 14 in Richtung Anlagesteg 13 wird der Lappen über die Führungseinrichtung 18 relativ zum Anlagesteg 13 angehoben. In Fig. 6c ist eine Situation dargestellt, wobei sowohl der Rand des Anlagesteges 13 als auch der Lappen 14 korrespondierende Führungseinrichtungen 18 aufweisen. Durch das Eindrehen der Schraube 15 wird der Lappen 14 seitlich zum Rand des Anlagesteges 13 bewegt und über die zusammenwirkenden Schrägflächen 18 angehoben. Die Führungseinrichtung 18 kann beispielsweise als Schrägfläche oder als Rundung ausgebildet sein.

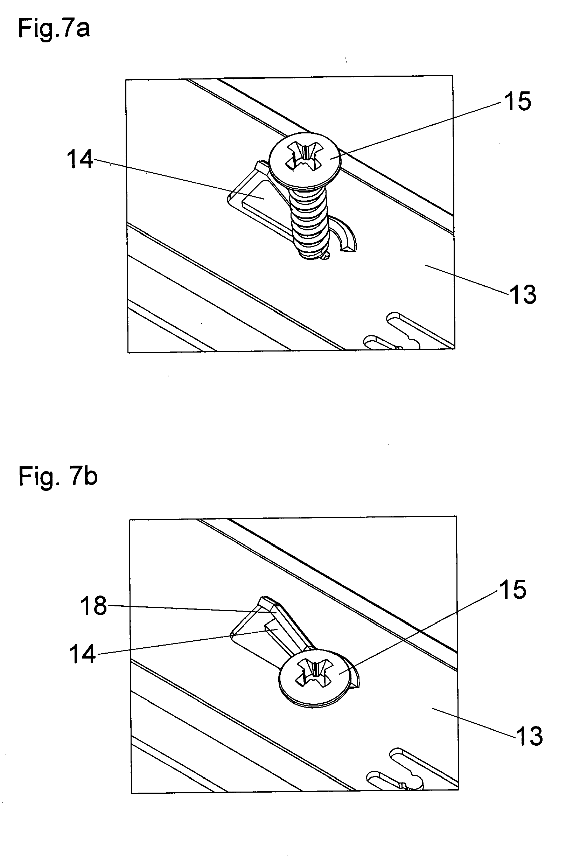

Fig. 7a zeigt ein weiteres Ausführungsbeispiel, wobei nur ein Lappen 14 durch Eindrehen einer Schraube 15 in Richtung Möbelteil bewegbar und um die Schraubenachse verdrehbar ist. Wie aus Fig.7b hervorgeht, wird beim Eindrehen der Schraube 15 der Lappen 14 über die Führungseinrichtung 18 - welche im gezeigten Ausführungsbeispiel durch einen aufgebogenen Abschnitt des Anlagesteges gebildet ist - zwischen der dem Schraubenkopf abgewandten Seite des Anlagesteges und dem zu fixierenden Möbelteil hineingeschoben, wodurch das Möbelteil relativ zum Anlagesteg 13 kraftschlüssig klemmend fixierbar ist.

Die vorliegende Erfindung beschränkt sich nicht auf die gezeigten Ausführungsbeispiele, sondern erstreckt sich auf alle Varianten und technischen Äquivalente, welche in die Reichweite der nachfolgenden Ansprüche fallen können. Auch sind die in der Beschreibung gewählten Lageangaben, wie z.B. oben, seitlich, usw. auf die unmittelbar dargestellte Figur bezogen und sind bei einer Lageänderung sinngemäß auf die neue Lage zu übertragen.

## Patentansprüche

1. Auflage (12) für ein plattenförmiges Möbelteil, insbesondere einen Schubladenboden (8), wobei die Auflage (12) einen Anlagesteg (13) aufweist, der wenigstens einen zum Möbelteil hin verbiegbaren Lappen (14) aufweist, **dadurch gekennzeichnet, dass** der wenigstens eine Lappen (14) in einer Ausgangsstellung in einer Aussparung (25) des Anlagesteges (13) liegt und dass der Lappen (14) und/oder der Rand der Aussparung (25) eine Führungseinrichtung (18) aufweist bzw. aufweisen, wobei der - vorzugsweise durch Eindrehen einer Schraube (15) - seitlich auf den Rand der Aussparung (25) zubewegte Lappen (14) über die Führungseinrichtung (18) in einer Haltestellung zum Möbelteil hin aus der Aussparung (25) austritt.

2. Auflage nach Anspruch 1, **dadurch gekennzeichnet, dass** die Führungseinrichtung (18) eine am Lappen (14) und/oder eine am Rand der Aussparung (25) ausgebildete Schrägfläche oder Rundung aufweist.

3. Auflage nach Anspruch 1 oder 2, **dadurch gekennzeichnet, dass** der wenigstens eine Lappen (14) in der Ausgangsstellung im Wesentlichen bündig in der Aussparung (25) angeordnet ist.

4. Auflage nach einem der Ansprüche 1 bis 3, **dadurch gekennzeichnet, dass** der Anlagesteg (13) eine, vorzugsweise im Wesentlichen kreisförmige, Öffnung (16) zur Aufnahme der Schraube (15) aufweist.

5. Auflage nach einem der Ansprüche 1 bis 4, **dadurch gekennzeichnet, dass** der wenigstens eine Lappen (14) in der Haltestellung zwischen dem Anlagesteg (13) und dem plattenförmigen Möbelteil (8) angeordnet ist.

6. Auflage nach einem der Ansprüche 1 bis 5, **dadurch gekennzeichnet, dass** der wenigstens eine Lappen (14) als Flügel mit einem freien Ende ausgebildet ist..

7. Auflage nach einem der Ansprüche 1 bis 6, **dadurch gekennzeichnet, dass** ein mit der Auflage (12) in Verbindung stehender Anschlag (19) vorgesehen ist, wobei das plattenförmige Möbelteil (8) durch den Lappen (14) gegen diesen Anschlag (19) drückbar ist.

8. Auflage nach Anspruch 7, **dadurch gekennzeichnet, dass** der Anschlag (19) als Nase an einer Schubladenseitenwand (9) ausgebildet ist.

9. Auflage nach einem der Ansprüche 1 bis 8, **dadurch gekennzeichnet, dass** wenigstens zwei Lappen (14) vorgesehen sind, welche durch Eindrehen der Schraube (15) relativ zueinander bewegbar sind.

10. Auflage nach Anspruch 9, **dadurch gekennzeichnet, dass** die wenigstens zwei Lappen (14) im Wesentlichen symmetrisch ausgebildet sind.

11. Auflage nach einem der Ansprüche 1 bis 10, **dadurch gekennzeichnet, dass** die Auflage (12) mit einer Schubladenseitenwand (9) verbunden oder mit dieser lösbar verbindbar ist.

12. Auflage nach einem der Ansprüche 1 bis 11, **dadurch gekennzeichnet, dass** der Anlagesteg (13) in Montagelage im Wesentlichen horizontal verläuft.

13. Schubladenseitenwand mit einer Auflage nach einem der Ansprüche 1 bis 12.

14. Schublade mit wenigstens einer Schubladenseitenwand nach Anspruch 13.

## Claims

1. A support (12) for a plate-shaped furniture part, in particular a drawer bottom (8), wherein the support (12) has an abutment limb (13) with at least one tab (14) which is bendable towards the furniture part, **characterized in that** the at least one tab (14), in a starting position, is disposed within an opening (25) of the abutment limb (13), and the tab (14) and/or the edge of the opening (25) has or have a guide device (18), wherein the tab (14) - preferably by screwing into a screw (15) - is moved laterally towards the edge of the opening (25) and, by way of the guide device (18), protrudes from the opening (25) in a holding position towards the furniture part.

2. The support according to claim 1, **characterized in that** the guide device (18) has a curved or an inclined surface arranged on the tab (14) and/or arranged at the edge of the opening (25).

3. The support according to claim 1 or 2, **characterized in that** the at least one tab (14), in the starting position, is arranged substantially flush within the opening (25).

4. The support according to one of the claims 1 to 3, **characterized in that** the abutment limb (13) has a, preferably substantially circular, orifice (16) for receiving the screw (15).

5. The support according to one of the claims 1 to 4, **characterized in that** in the holding position, the at least one tab (14) is arranged between the abutment web (13) and the plate-shaped furniture part (8).

6. The support according to one of the claims 1 to 5, **characterized in that** the at least one tab (14) is in the form of a wing having a free end.

7. The support according to one of the claims 1 to 6, **characterized in that** there is provided an abutment (19) which is connected to the support (12), wherein the plate-shaped furniture part (8) can be pressed against said abutment (19) by way of the tab (14).

8. The support according to claim 7, **characterized in that** the abutment (19) is in the form of a nose arranged on a drawer side wall (9).

9. The support according to one of the claims 1 to 8, **characterized in that** there are provided at least two tabs (14) which are movable relative to each other by screwing into the screw (15).

10. The support according to claim 9, **characterized in that** the at least two tabs (14) are of a substantially symmetrical configuration.

11. The support according to one of the claims 1 to 10, **characterized in that** the support (12) is connected to a drawer side wall (9) or can be releasably connected thereto.

12. The support according to one of the claims 1 to 11, **characterized in that** the abutment limb (13), in the mounted position, extends substantially horizontally.

13. A drawer side wall having a support according to one of the claims 1 to 12.

14. A drawer having at least one drawer side wall according to claim 13.

## Revendications

1. Support (12) pour un élément de meuble en forme de plaque, en particulier un fond de tiroir (8), le support (12) présentant une baguette d'appui (13) qui présente au moins une patte (14) pouvant se plier vers l'élément de meuble, **caractérisé en ce que** la patte (14) au moins au nombre de un, dans une position initiale, repose dans un évidement (25) de la baguette d'appui (13) et **en ce que** la patte (14) et/ou le bord de l'évidement (25) présente ou présentent un dispositif de guidage (18), la patte déplacée latéralement vers le bord de l'évidement (25) - de préférence par le vissage d'une vis - sortant de l'évidement (25) par le biais du dispositif de guidage (18) et adoptant une position de maintien en direction de l'élément de meuble.

2. Support selon la revendication 1, **caractérisé en ce que** le dispositif de guidage (18) présente une face oblique ou un arrondi constitué(e) sur la patte (14) et/ou sur le bord de l'évidement (25).

3. Support selon la revendication 1 ou 2, **caractérisé en ce que** la patte (14) au moins au nombre de un, dans la position initiale, est disposée de façon essentiellement en affleurement avec l'évidement (25).

4. Support selon l'une des revendications 1 à 3, **caractérisé en ce que** la baguette d'appui (13) présente une ouverture (16), de préférence essentiellement circulaire, destinée à recevoir la vis (15).

5. Support selon l'une des revendications 1 à 4, **caractérisé en ce que** la patte (14) au moins au nombre de un est, dans la position de maintien, disposée entre la baguette d'appui (13) et l'élément de meuble (8) en forme de plaque.

6. Support selon l'une des revendications 1 à 5, **caractérisé en ce que** la patte (14) au moins au nombre de un est constituée en tant qu'ailette avec une extrémité libre.

7. Support selon l'une des revendications 1 à 6, **caractérisé en ce qu'**il est prévu une butée (19) qui est en liaison avec le support (12), l'élément de meuble (8) en forme de plaque pouvant être pressé contre cette butée (19) par la patte (14).

8. Support selon la revendication 7, **caractérisé en ce que** la butée (19) est constituée en tant que bec sur une paroi latérale de tiroir (9).

9. Support selon l'une des revendications 1 à 8, **caractérisé en ce qu'**il est prévu au moins deux pattes (14) qui peuvent être déplacées l'une par rapport à l'autre par le vissage de la vis (15).

10. Support selon la revendication 9, **caractérisé en ce que** les pattes (14) au moins au nombre de deux sont constituées de façon essentiellement symétrique.

11. Support selon l'une des revendications 1 à 10, **caractérisé en ce que** le support (12) est raccordé à une paroi latérale de tiroir (9) ou peut être raccordé à celle-ci de façon détachable.

12. Support selon l'une des revendications 1 à 11, **caractérisé en ce que**, dans la position de montage, la baguette d'appui (13) est essentiellement horizontale.

13. Paroi latérale de tiroir avec un support selon l'une des revendications 1 à 12.

14. Tiroir avec au moins une paroi latérale de tiroir selon la revendication 13.
